# EUROPEAN PATENT APPLICATION

(11) **EP 4 827 044 A1**
(43) Date of publication of application: **21.10.2026**
(21) Application number: 25170285.8
(22) Date of filing: 14.04.2025
(51) Int. Cl.: H04L 9/32, H04L 9/40, H04W 12/106

(54) **MAC CE SECURITY PROTECTION**

(71) Applicant: Nokia Technologies Oy, 02610 Espoo (FI)
(72) Inventor: ORKOPOULOS, Stawros, Nersingen (DE)
(74) Representative: Nokia EPO representatives

(57) **Abstract**

Embodiments of the present disclosure provide a solution for MAC CE security protection. In a solution, an apparatus transmits, to a further apparatus, a MAC message including at least one MAC PDU. A MAC PDU of the at least one MAC PDU indicates a security type and a message authentication code. The security type indicates a coding metric for generating the message authentication code. The message authentication code is generated according to the coding metric and based on at least one of: a first key associated with the apparatus or the further apparatus, a second key associated with a radio resource control, RRC, layer, or information associated with the apparatus or the further apparatus.

## Description

### FIELD

Various example embodiments of the present disclosure generally relate to the field of telecommunication and in particular, to methods, devices, apparatuses and computer readable storage medium for media access control (MAC) control element (CE) security protection.

### BACKGROUND

A communication network may serve as a facility that enables communications between two or more communication devices or provides communication devices access to a data network. A mobile or wireless communication network is one example of a communication network. A communication device may be provided with a service by an application server.

The communication network may operate in accordance with standards such as those provided by Third Generation Partnership Project (3GPP) or European Telecommunications Standards Institute (ETSI). Examples of standards provided by 3GPP are the so-called 3GPP standards for cellular technology generations, such as 3GPP standards for 4G technology, 5G technology, 6G technology etc.

### SUMMARY

In a first aspect of the present disclosure, there is provided a apparatus. The apparatus comprises at least one processor; and at least one memory storing instructions that, when executed by the at least one processor, cause the apparatus at least to: transmit, to a further apparatus, a MAC message including at least one MAC protocol data unit (PDU). A MAC PDU of the at least one MAC PDU indicates a security type and a message authentication code. The security type indicates a coding metric for generating the message authentication code. The message authentication code is generated according to the coding metric and based on at least one of: a first key associated with the apparatus or the further apparatus, a second key associated with a radio resource control (RRC) layer, or information associated with the apparatus or the further apparatus.

In a second aspect of the present disclosure, there is provided a method. The method comprises: transmitting, to a further apparatus, a MAC message including at least one MAC PDU. A MAC PDU of the at least one MAC PDU indicates a security type and a message authentication code. The security type indicates a coding metric for generating the message authentication code. The message authentication code is generated according to the coding metric and based on at least one of: a first key associated with the apparatus or the further apparatus, a second key associated with a RRC layer, or information associated with the apparatus or the further apparatus.

In a third aspect of the present disclosure, there is provided a apparatus. The apparatus comprises means for transmitting, to a further apparatus, a MAC message including at least one MAC PDU. A MAC PDU of the at least one MAC PDU indicates a security type and a message authentication code. The security type indicates a coding metric for generating the message authentication code. The message authentication code is generated according to the coding metric and based on at least one of: a first key associated with the apparatus or the further apparatus, a second key associated with a radio resource control, RRC, layer, or information associated with the apparatus or the further apparatus.

In a fourth aspect of the present disclosure, there is provided a computer readable medium. The computer readable medium comprises instructions stored thereon for causing an apparatus to perform at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates the LTM Cell Switch Command MAC CE;
FIG. 3 illustrates a schematic diagram of the LTM Cell Switch Command MAC CE;
FIG. 4 illustrates a MAC structure overview;
FIG. 5A illustrates an example DL MAC PDU;
FIG. 5B illustrates an example UL MAC PDU;
FIG. 6 illustrates a key hierarchy generation process in 5GS (5G system);
FIG. 7A illustrates an example data ciphering process;
FIG. 7B illustrates an example derivation process of MAC-I/NAS-MAC or XMAC-I/XNAS-MAC;
FIG. 8 illustrates a protocol stack for the support of integrated access and backhaul mobile termination (IAB-MT)'s RRC and NAS connections;
FIG. 9 shows a flowchart of an example method implemented at a apparatus in accordance with some example embodiments of the present disclosure;
FIG. 10 illustrates an example of a MAC PDU in accordance with some example embodiments of the present disclosure;
FIG. 11 illustrates a simplified block diagram of a device that is suitable for implementing example embodiments of the present disclosure; and
FIG. 12 illustrates a block diagram of an example computer readable medium in accordance with some example embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second," ..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is necessarily performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5G Advanced, 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU). Such architecture can be applied to an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

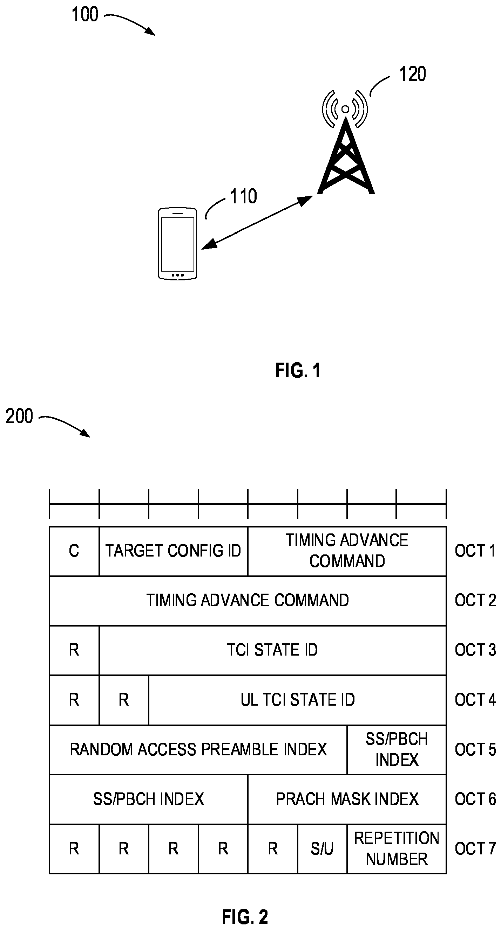

FIG. 1 illustrates an example communication environment 100 in which example embodiments of the present disclosure can be implemented. In the communication environment 100, a plurality of communication devices, including a first apparatus 110 and a second apparatus 120, may communicate with each other. The first apparatus 110 may be a terminal device or a UE. The second apparatus 120 may be a network device, a network node, a BS, a gNB, or an eNB. The first apparatus 110 may communicate with the second apparatus 120 within a coverage of a cell managed by the second apparatus 120.

As used herein, a transmission direction from the second apparatus 120 to the first apparatus 110 is referred to as a downlink (DL), while a transmission direction from the first apparatus 110 to the second apparatus 120 is referred to as uplink (UL).

It is to be understood that the number of apparatuses, devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional apparatuses or devices may be located in the cell, and one or more additional cells may be deployed in the communication environment 100. For example, in FIG. 1, one terminal device is depicted; however, it is to be understood that the communication environment 100 may include additional terminal devices beyond the one shown.

Communications in the communication environment 100 may be implemented according to any proper communication protocol(s), comprising, but not limited to, cellular communication protocols, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future. For example, via artificial intelligence/machine learning (AI/ML) techniques, new waveforms may be developed and employed during the run time.

Ongoing work in 3GPP has introduced advanced features aimed at improving mobility procedures. In particular, there are study items focusing on layer one (L1)/layer two (L2) Triggered Mobility (LTM). Regarding the LTM cell switch command, the MAC layer specification defines a MAC CE frame, as shown in FIG. 2, which illustrates the LTM Cell Switch Command MAC CE 200. The LTM Cell Switch Command MAC CE 200 may include seven octets (OCTs). Each OCT may include one or more fields as shown in FIG.2. For example, the OCT 3 may include a reserved (R) field and a transmission configuration indication (TCI) state identifier (ID) field. For the Inter-CU LTM feature/function, the source gNB sends the MAC CE Cell Switch Command message to the UE so the UE may select or derive relevant session keys for handover. In this context, session keys refer to those used during key handling in handover. For a vertical key derivation, a next hop chaining counter (NCC) value needs to be signaled to the UE.

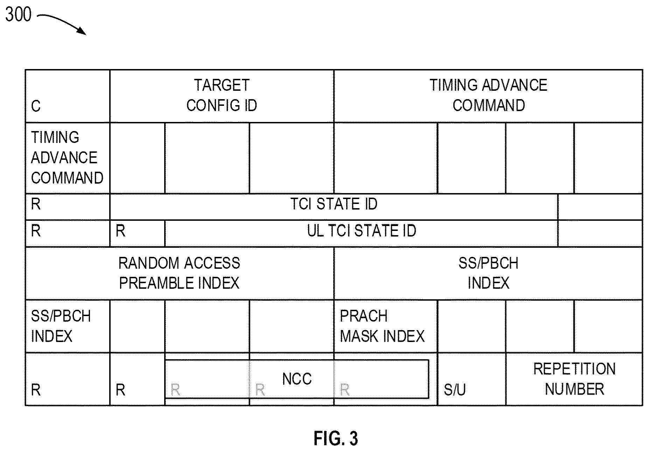

FIG. 3 illustrates a schematic diagram of the LTM Cell Switch Command MAC CE, showing a potential approach for communicating the NCC value via the LTM Cell Switch Command MAC CE frame. As shown in FIG. 3, the NCC value is built upon 3 binary digits. Specifically, three (R)-bits in the LTM Cell Switch Command MAC CE 200 in FIG. 2 may be replaced by the NCC value. The structure shown in FIG. 3 is merely one example; other placements of the NCC value are also possible. However, it is assumed herein that the MAC frame carries the NCC value. From a security perspective, the MAC CE frame is not protected. For example, there is no encryption, no integrity protection, and no replay protection. From a risk assessment standpoint, because the NCC value is used to select the key that is further used to derive session keys, a robust security mechanism is required. Generally, a MAC CE security solution should be made available to different features. In other words, the security solution should be generic, and the protection of the NCC value may be a first use case for the security solution.

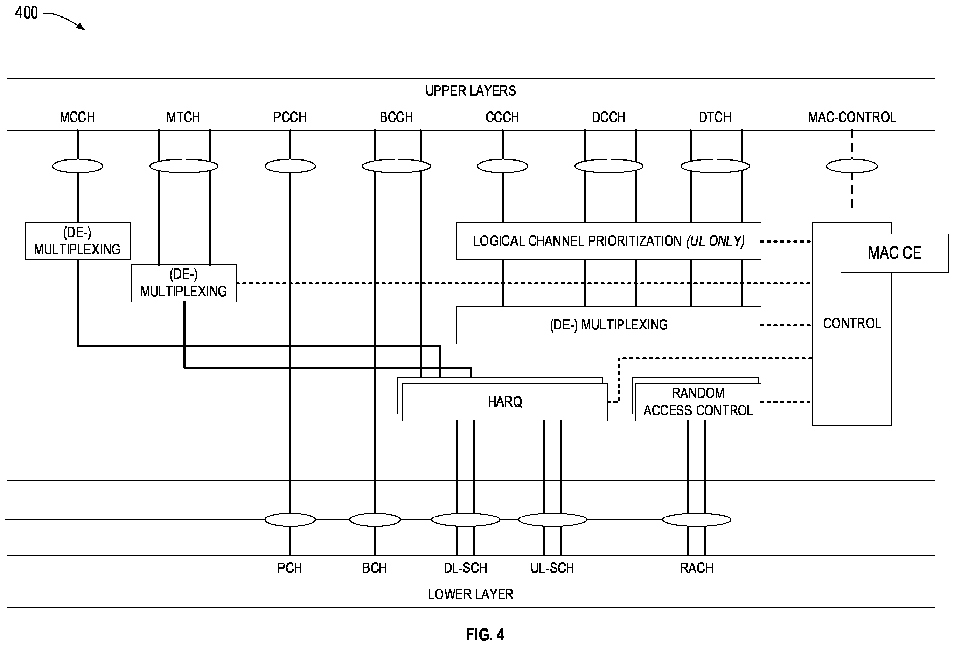

For a more holistic view on the entity level, the MAC layer framework should be considered, i.e., the MAC layer building blocks and the building block that is mainly creating/consuming the MAC CE. FIG. 4 illustrates a MAC structure overview 400 for an apparatus. As shown, a plurality of layers, such as upper layers and lower layers may be specified. A plurality of channels and protocols may be configured for these channels. The MAC CE may be transmitted via a control functional block such as a MAC layer control functional block. The MAC CE values will be created/consumed by the MAC layer control functional block. Various MAC CEs may be created or consumed by the MAC control functional block shown in FIG. 4.

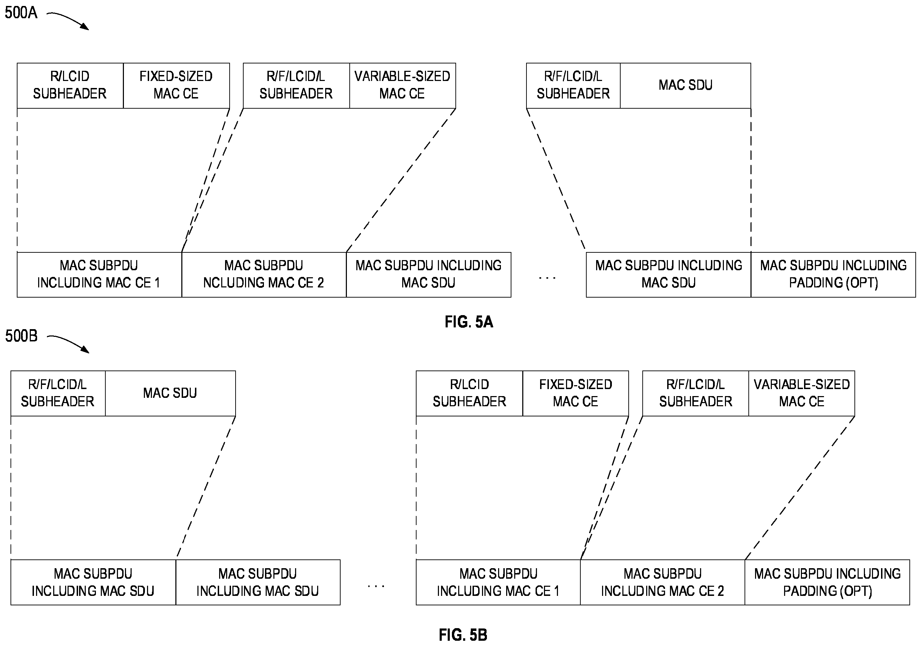

A first high-level review of the defined MAC CEs has shown that not all MAC CEs have the same sensitivity. Hence, not all MAC CEs need to be protected the same way. Thus, a potential solution should take into consideration the introduction of MAC CE channels, where each channel is providing a separate/different level of security. Another aspect is the transmission rate of the MAC CE, i.e., some MAC CEs will be transferred very often, while others will be transferred seldom. This is yet another reason for the introduction of MAC CE channels. The MAC CE values will be transmitted via a transport block (TB). This may be understood with respect to FIG. 5A and FIG. 5B, which illustrate an example DL MAC PDU 500A and an example UL MAC PDU 500B. For DL transmissions, the MAC CE frames will be included in front of the MAC CE SDUs, while for the UL transmissions, these will be appended to the MAC SDUs. However, the MAC CE framework is the same for DL and UL, and the framework does foresee the usage of fixed and variable MAC CE SDU size. Thus, depending on the format, the MAC CE sub-header may or may not require a length value.

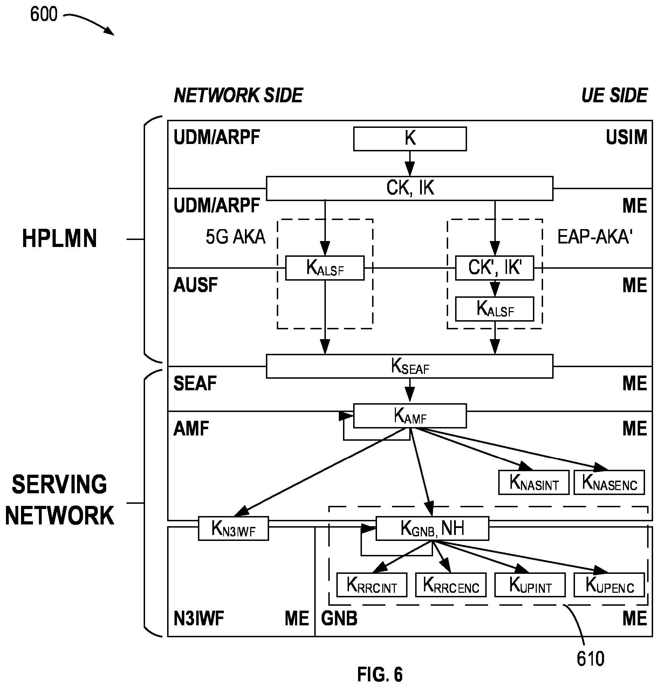

For security reasons, i.e., encryption and integrity protection, there is a need for key-derivation and key-stream generation. The key derivation is used in the context of the 3GPP defined key-hierarchy, as depicted in FIG. 6, which illustrates a key hierarchy generation process 600 in 5GS. Different keys (e.g., K_{RRCint}) are obtained by running the key derivation function (KDF). The KDF is placed inside the radio resource control (RRC). The KDF will be using different inputs for the derivation of the output key. The key-stream generation uses of an algorithm core (e.g., AES, Snow 5G, ZUC) and other related input parameters to compute an output key-stream, which is then XORed with the input bitstream in the clear.

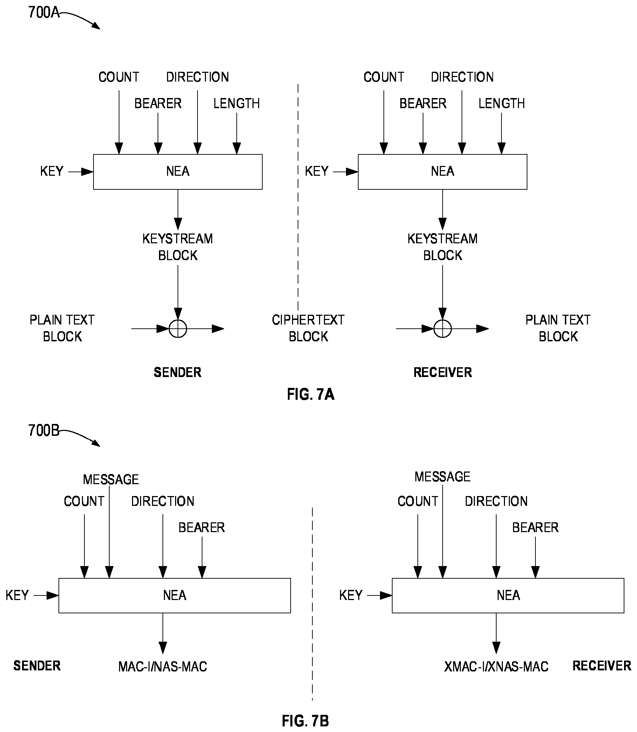

The key-stream generation is different for ciphering (see FIG. 7A, which illustrates an example data ciphering process 700A) and for integrity protection (see FIG. 7B, which illustrates an example derivation process 700B of MAC-I/non-access stratum (NAS)-MAC (or XMAC-I/XNAS-MAC)). As shown in FIG. 7A, at the sender side, a plain text block may be encrypted based on a keystream block to obtain a ciphertext block. The keystream block may be generated based on a key, a count, a bearer, a direction, and a length. At the receiver side, the plain text block may be obtained from the ciphertext block based on the keystream block. Likewise, the keystream block may be generated based on the key, the count, the bearer, the direction, and the length.

As shown in FIG. 7B, at the sender side, the MAC-I or NAS-MAC may be generated based on a key, a count, a message, a direction, and a bearer. At the receiver side, the XMAC-I or XNAS-MAC may be obtained based on the key, the count, the message, the direction, and the bearer.

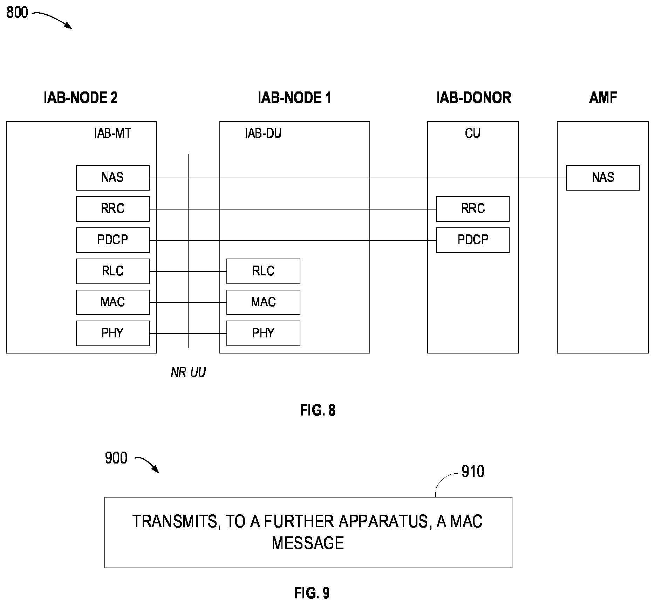

For a more holistic view on system level, the end-to-end RAN/CN architecture should be considered. More specifically, the split-gNB should be considered more carefully, because the introduction of MAC CE security and the key deployment is adding new aspects. FIG. 8 illustrates a protocol stack 800 for the support of IAB-MT's RRC and NAS connections. It should be understood that the protocol stack 800 as shown in FIG. 8 is merely for illustration of the placement of the protocols, and other deployments are also possible. As shown, an IAB-node such as IAB-node 2 (for example, IAB-MT) may communicate with an AMF via an NAS layer. The IAB-node 2 may communicate with an IAB-donor such as CU via RRC layer and packet data convergence protocol (PDCP) layer. In addition, between the IAB-node 2 and another IAB-node such as IAB-node 1 (for example, an IAB-DU), corresponding radio link control (RLC) layers, MAC layers, and physical (PHY) layers are connected. The MAC message such as MAC CE may be transmitted between the IAB-node 1 and IAB-node 2 via the MAC layers.

As mentioned above, the KDF is mapped to the RRC, and the RRC in this deployment is mapped to gNB-CU. The PDCP may be split into PDCPc and PDCPu, and both are processing the de-/encryption and/or integrity protection/verification. There is no clear separation between them. The PDCP in this deployment is mapped to the gNB-CU. In this deployment, key derivation and the key-stream generation are always processed inside the gNB-CU. The KgNB is being protected and maintained always inside the gNB-CU. Now for the introduction of the MAC CE security it might be that key material has to be maintained inside the MAC layer of the gNB-DU.

Several challenges arise when extending security features to MAC CE at the MAC layer. For example, a suitable framework is needed to integrate security operations, such as encryption and/or integrity protection, into existing MAC CE mechanisms. An appropriate key-derivation process is desired to provide the necessary keys for MAC CE protection. The generation and distribution of key-streams for MAC CE security should be carefully managed, especially under split-gNB or other complex network deployments. Also, it is required to introduce replay protection for MAC CE frames to guard against malicious reuse of earlier transmissions.

In accordance with some example embodiments of the present disclosure, there is provided a solution for MAC CE security protection. In a solution, an apparatus transmits, to a further apparatus, a MAC message including at least one MAC PDU. A MAC PDU of the at least one MAC PDU indicates a security type and a message authentication code. The security type indicates a coding metric for generating the message authentication code. The message authentication code is generated according to the coding metric and based on at least one of: a first key associated with the apparatus or the further apparatus, a second key associated with a radio resource control, RRC, layer, or information associated with the apparatus or the further apparatus. As such, security of MAC CE can be strengthened.

FIG. 9 shows a flowchart of an example method 900 implemented at a apparatus in accordance with some example embodiments of the present disclosure. For the purpose of discussion, the method 900 will be described from the perspective of the first apparatus 110 in FIG. 1. It is to be understood that in some example embodiments, the method 900 may also be implemented by the second apparatus 120 or any other apparatus or device.

At block 910, the first apparatus 110 transmits, to a further apparatus such as the second apparatus 120, a MAC message. The MAC message includes at least one MAC PDU. In embodiments where the first apparatus 110 transmitting the MAC message to the second apparatus 120, the first apparatus 110 may be referred to as a transmitter or a sender of the MAC message, while the second apparatus 120 may be referred to as a receiver of the MAC message. It is to be understood that in some example embodiments, the first apparatus 110 may be the receiver of the MAC message, while the second apparatus 120 may be the transmitter or the sender of the MAC message. The roles of the first apparatus 110 and the second apparatus 120 may be interchangeable.

In example embodiments of the present disclosure, a MAC PDU of the at least one MAC PDU such as a single MAC PDU or a last MAC PDU of a plurality of MAC PDUs indicates a security type and a message authentication code. The security type indicates a coding metric for generating the message authentication code. The message authentication code (also referred to as MAC-I) may be used for authentication of the transmitter of the MAC message. By way of example, the coding metric for generating the message authentication code may include a hashing function, such as secure hash algorithm (SHA) 2, SHA3, hash-based message authentication code (HMAC)-SHA2, HMAC-SHA3 function, and/or the like. The SHA2 may be based on a standard such as federal information processing standards publication (FIPS) 180-4. The SHA3 may be based on a standard such as FIPS 202. It is to be understood that the coding metric may be any suitable currently developed or future function or algorithm for deriving an authentication code or representation. Scope of the present disclosure is not limited here. For the purpose of discussion, some example embodiments will be described with the coding metric being a hashing function. In embodiments where the coding metric being a hashing function, the security type may also be referred to as a hashing type or HMAC type. The HMAC type may be included in a security tag (SecTag) in the MAC message. The SecTag may be used for hash algorithm or function selection. This is relevant as it may be the hash function has been selected out of a SHA2-family or SHA3-family.

In an example, the message authentication code is generated according to the coding metric and based on a first key associated with the first apparatus 110 or the second apparatus 120. For example, the first key may be a key of the second apparatus 120. In some example embodiments, the second apparatus 120 may include a gNB-distributed unit (DU) and a gNB-centralized unit (CU). The first key may be a key of the gNB-DU (referred to as "K_{gNS-DU}") or a key of the gNB-CU (referred to as "K_{gNB-CU}"). The KDF dedicated to MAC CE protection may generate and provide new Keys like K_{gNB-DU} or K_{gNB-CU}. These keys may be further used to compute a session key for the MAC CE protection e.g., K_{MACint}.

In some example embodiments, the first apparatus 110 may generate a session key (such as K_{MACint}) for the MAC message based on the first key such as K_{gNB-DU} or K_{gNB-CU}. The first apparatus 110 may generate the message authentication code based on the session key and according to the coding metric such as hashing function. The first apparatus 110 may generate the MAC message by including the message authentication code. For example, the dedicated key K_{MACint} may be used as input to a HMAC-SHA2 or HMAC-SHA3 function, and the outcome the keyed-hash MAC is the MAC CE MAC-I, which needs to be transmitted together with the related MAC CE frame.

In another example, the message authentication code is generated according to the coding metric and based on a second key associated with a radio resource control (RRC) layer. For example, the second key may be an RRC key such as K_{RRCint} or any other existing or future RRC session key. The first apparatus 110 may generate the message authentication code based on the RRC session key and according to the coding metric. The first apparatus 110 may generate the MAC message by including the message authentication code. In some cases, a single key may be used for a single function. It is assumed that the MAC CE information is seen to be RRC messaging, then in this case the K_{RRCint} may be (re)used for the keyed hashing. By reusing the existing session key as input for the hash computation, the efforts in implementation may be reduced.

In a further example, the message authentication code is generated according to the coding metric and based on information associated with the first apparatus 110 such as UE specific information. For example, the first apparatus 110 may generate a third key based on the UE specific information. The UE specific information may be accessible by a universal subscriber identity module (USIM), a unified data management (UDM), an authentication credential repository and processing function (ARRF), and/or the like. This approach is basically using keys which are known to the UE and the UDM/ARPF. In this case only these two entities are owning the relevant keys and only these may compute the session keys for the MAC CE framework protection.

The first apparatus 110 may generate the message authentication code based on the third key and according to the coding metric. For example, the secret or key for the keyed-hash MAC may be derived out of UE specific information only known to USIM and UDM/ARPF. The first apparatus 110 may generate the MAC message by including the message authentication code. The keys for the hash computation may not depend on the key-hierarchy as shown in FIG. 6. For the UE side this key-hierarchy is not so much of a problem, because the UE owns the secret key K, and has implemented all the needed hashing algorithms. For the gNB side this key-hierarchy is more a challenge, because the gNB depends on it is receiving the required information. Therefore, the authentication procedures, specifically these parts which propagate the K_{gNB}, may need to be extended by this key that is used for the hash value (MAC-I) computation.

It is to be understood that these example embodiments for deriving the message authentication code are only described for the purpose of illustration, without suggesting any limitation. These example embodiments may be varied or combined.

Several example embodiments regarding the generation of the message authentication code have been described. In some example embodiments, the generated message authentication code may not be protected or encrypted.

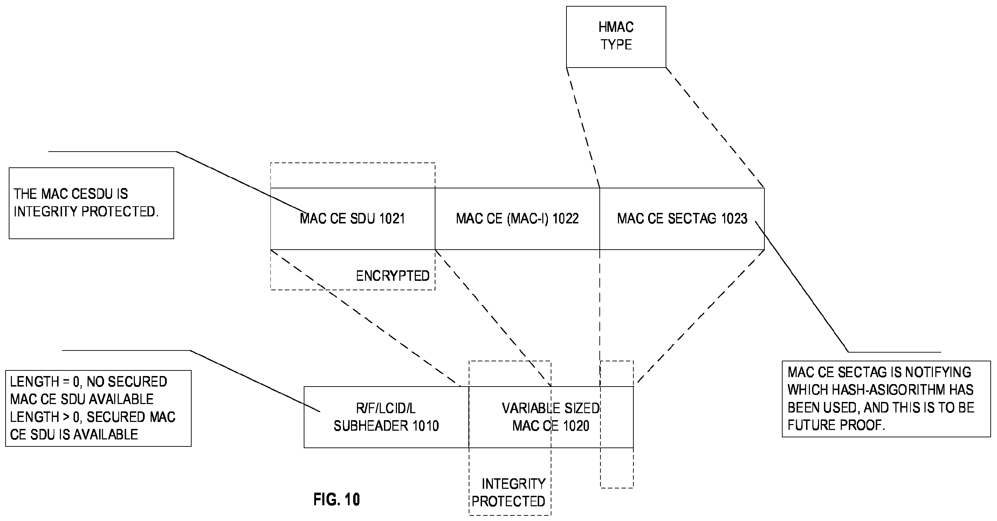

The MAC PDU may further include a MAC CE service data unit (SDU), a header, and/or the like. The MAC CE SDU may include control element related information. The MAC CE SDU or the header of the MAC CE SDU may be integrity protected and/or encrypted. FIG. 10 illustrates an example of a MAC PDU in accordance with some example embodiments of the present disclosure. As shown, the MAC PDU includes a header such as R/F/LCID/L subheader 1010 and a variable-sized MAC CE 1020. The variable-sized MAC CE may include a MAC CE SDU 1021, a MAC CE (MAC-I) 1022 and a MAC CE SecTag 1023.

In some example embodiments, the at least one MAC PDU includes the MAC PDU and at least one further MAC PDU. The at least one further MAC PDU may be integrity protected and/or encrypted.

In some example embodiments, the MAC PDU may further indicate a channel identifier (CID), a MAC layer sequence number for replay protection, a length of secured MAC CE in the MAC message, and/or the like. The CID may indicate a cipher protection of the MAC message, a sensitivity of the MAC message, and/or the like.

The MAC frame may exist out of a subheader and the associated MAC CE block. The MAC framework is not changed for backward compatibility purposes. There may be still a MAC CE with fixed or variable size. The corresponding headers remain as specified, and the existing (R)-bit may not be used.

Assuming that a legacy entity is receiving an integrity protected MAC CE frame, then this frame may be read and interpreted, because the subheader is not encrypted. Since the location of MAC SDU is immediate after the subheader, a legacy receiving entity may read and interpret. The SecTag and MAC-I may be read, but not interpreted. If SecTag and MAC-I may not be interpreted, these two elements may be discarded by the legacy implementation.

As mentioned, in some example embodiments, the MAC CE SDU may be integrity protected. The MAC-I may be typically not protected. The secured MAC CE frame may be integrity protected. For the protection of the MAC message, new keys may be generated as described above.

The hash-functions for generating the key may be standardized and are available on network node side because they have been already introduced by other features. Therefore, this approach is simplifying and reducing the efforts in implementation. The placement of the hash function may be higher layers but may also be on MAC layer. The same applies to the integrity verification.

These example embodiments may support backward compatibility support. Integrity protected frames may be read and interpreted by legacy receiving entities.

The SecTag may be always at the end, and the information elements from the relevance perspective are starting from right-to-left. The length of the IE's may be adapted in the future according to new requirements.

It should be understood that the methods for MAC CE security protection and the frame structures proposed herein may be used on multiple types of MAC CE, including but not limited to:
- Semi-Persistent (SP) Channel State Information Reference Signal (CSI-RS)/ Channel State Information Interference Measurement (CSI-IM) Resource Set Activation/Deactivation MAC CE;
- Aperiodic CSI Trigger State Subselection MAC CE;
- Transmission Configuration Indicator (TCI) States Activation/Deactivation for UE-specific Physical Downlink Shared Channel (PDSCH) MAC CE;
- TCI State Indication for UE-specific Physical Downlink Control Channel (PDCCH) MAC CE;
- SP CSI reporting on Physical Uplink Control Channel (PUCCH) Activation/Deactivation MAC CE;
- Enhanced SP CSI reporting on PUCCH Activation/Deactivation MAC CE;
- SP Sounding Reference Signal (SRS) Activation/Deactivation MAC CE;
- PUCCH spatial relation Activation/Deactivation MAC CE;
- Enhanced PUCCH spatial relation Activation/Deactivation MAC CE;
- SP Zero-Power (ZP) CSI-RS Resource Set Activation/Deactivation MAC CE;
- Recommended Bit Rate MAC CE;
- Enhanced SP/ Aperiodic (AP) SRS Spatial Relation Indication MAC CE;
- SRS Pathloss Reference RS Update MAC CE;
- PUSCH Pathloss Reference RS Update MAC CE;
- Serving Cell set based SRS Spatial Relation Indication MAC CE;
- SP Positioning SRS Activation/Deactivation MAC CE;
- Timing Delta MAC CE;
- Guard Symbols MAC CEs;
- Positioning Measurement Gap Activation/Deactivation Command MAC CE;
- PPW Activation/Deactivation Command MAC CE;
- PUCCH spatial relation Activation/Deactivation for multiple Transmission Reception Point (TRP) PUCCH repetition MAC CE;
- PUCCH Power Control Set Update for multiple TRP PUCCH repetition MAC CE;
- Unified TCI States Activation/Deactivation MAC CE;
- Differential Koffset MAC CE;
- Case-7 Timing advance offset MAC CE;
- DL TX Power Adjustment MAC CEs;
- Child Integrated Access and Backhaul Distributed Unit (IAB-DU) Restricted Beam Indication MAC CE;
- Timing Case Indication MAC CE;
- PSI-Based SDU Discard Activation/Deactivation MAC CE;
- Beam Failure Detection Reference Signal (BFD-RS) Indication MAC CE;
- Integrated Access and Backhaul Mobile Termination (IAB-MT) Recommended Beam Indication MAC CE;
- UL Power Spectral Density (PSD) range adjustment for IAB MAC CE;
- Case-6 Timing Request MAC CE;
- Network Controlled Repeater (NCR) Backhaul Link Beam Indication MAC CEs;
- NCR Access Link Beam Indication MAC CE;
- Enhanced Unified TCI States Activation/Deactivation MAC CE;
- LTM Cell Switch Command MAC CE;
- Candidate Cell TCI States Activation/Deactivation MAC CE;
- Aggregated SP Positioning SRS Activation/Deactivation MAC CE.

In some example embodiments, an apparatus capable of performing any of the method 900 (for example, the first apparatus 110 in FIG. 1 may comprise means for performing the respective operations of the method 900. The means may be implemented in any suitable form. For example, the means may be implemented in a circuitry or software module. The apparatus may be implemented as or included in the first apparatus 110 in FIG. 1.

In some example embodiments, the apparatus comprises means for transmitting, to a further apparatus, a MAC message including at least one MAC PDU. A MAC PDU of the at least one MAC PDU indicates a security type and a message authentication code. The security type indicates a coding metric for generating the message authentication code. The message authentication code is generated according to the coding metric and based on at least one of: a first key associated with the apparatus or the further apparatus, a second key associated with a RRC layer, or information associated with the apparatus or the further apparatus.

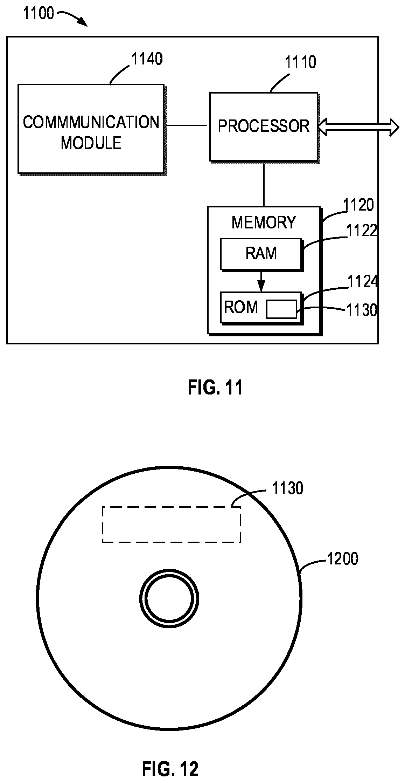

FIG. 11 is a simplified block diagram of a device 1100 that is suitable for implementing example embodiments of the present disclosure. The device 1100 may be provided to implement a communication device, for example, the first apparatus 110 or the second apparatus 120 as shown in FIG. 1. As shown, the device 1100 includes one or more processors 1110, one or more memories 1120 coupled to the processor 1110, and one or more communication modules 1140 coupled to the processor 1110.

The communication module 1140 is for bidirectional communications. The communication module 1140 has one or more communication interfaces to facilitate communication with one or more other modules or devices. The communication interfaces may represent any interface that is necessary for communication with other network elements. In some example embodiments, the communication module 1140 may include at least one antenna.

The processor 1110 may be of any type suitable to the local technical network and may include one or more of the following: general purpose computers, special purpose computers, microprocessors, digital signal processors (DSPs) and processors based on multicore processor architecture, as non-limiting examples. The device 1100 may have multiple processors, such as an application specific integrated circuit chip that is slaved in time to a clock which synchronizes the main processor.

The memory 1120 may include one or more non-volatile memories and one or more volatile memories. Examples of the non-volatile memories include, but are not limited to, a Read Only Memory (ROM) 1124, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1122 and other volatile memories that will not last in the power-down duration.

A computer program 1130 includes computer executable instructions that are executed by the associated processor 1110. The instructions of the program 1130 may include instructions for performing operations/acts of some example embodiments of the present disclosure. The program 1130 may be stored in the memory, e.g., the ROM 1124. The processor 1110 may perform any suitable actions and processing by loading the program 1130 into the RAM 1122.

The example embodiments of the present disclosure may be implemented by means of the program 1130 so that the device 1100 may perform any process of the disclosure as discussed with reference to FIG. 9. The example embodiments of the present disclosure may also be implemented by hardware or by a combination of software and hardware.

In some example embodiments, the program 1130 may be tangibly contained in a computer readable medium which may be included in the device 1100 (such as in the memory 1120) or other storage devices that are accessible by the device 1100. The device 1100 may load the program 1130 from the computer readable medium to the RAM 1122 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 12 shows an example of the computer readable medium 1200 which may be in form of CD, DVD or other optical storage disk. The computer readable medium 1200 has the program 1130 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A apparatus comprising:
at least one processor; and
at least one memory storing instructions that, when executed by the at least one processor, cause the apparatus at least to:
transmit, to a further apparatus, a medium access control, MAC, message, the MAC message comprising at least one MAC protocol data unit, PDU,
wherein a MAC PDU of the at least one MAC PDU indicates a security type and a message authentication code,
wherein the security type indicates a coding metric for generating the message authentication code, and
wherein the message authentication code is generated according to the coding metric and based on at least one of:
a first key associated with the apparatus or the further apparatus,
a second key associated with a radio resource control, RRC, layer, or
information associated with the apparatus or the further apparatus.

2. The apparatus of claim 1, wherein the apparatus comprises a network device, and the first key comprises a key of a distributed unit or a central unit of the network device, and
wherein the apparatus is further caused to:
generate a session key for the MAC message based on the first key;
generate the message authentication code based on the session key and according to the coding metric; and
generate the MAC message by including the message authentication code.

3. The apparatus of claim 1, wherein the second key comprises an RRC session key, and
wherein the apparatus is further caused to:
generate the message authentication code based on the RRC session key and according to the coding metric; and
generate the MAC message by including the message authentication code.

4. The apparatus of claim 1, wherein the information associated with the apparatus or the further apparatus comprises user equipment, UE, specific information, and
wherein the apparatus is further caused to:
generate a third key based on the UE specific information;
generate the message authentication code based on the third key and according to the coding metric; and
generate the MAC message by including the message authentication code.

5. The apparatus of claim 4, wherein the UE specific information is accessible by at least one of:
a universal subscriber identity module, USIM,
a unified data management, UDM, or
an authentication credential repository and processing function, ARRF.

6. The apparatus of any of claims 1 to 5, wherein the coding metric comprises a hashing function.

7. The apparatus of any of claims 1 to 6, wherein the message authentication code is not protected or encrypted.

8. The apparatus of any of claims 1 to 7, wherein the MAC PDU further comprises at least one of:
a MAC control element, CE, service data unit, SDU comprising a payload part, or
a header.

9. The apparatus of claim 8, wherein at least one of the MAC CE SDU or the header is integrity protected and/or encrypted.

10. The apparatus of claim 9, wherein the at least one MAC PDU comprises the MAC PDU and at least one further MAC PDU, and the at least one further MAC PDU is integrity protected and/or encrypted.

11. The apparatus of any of claims 1 to 10, wherein the MAC PDU further indicates at least one of:
a channel identifier indicating at least one of: a cipher protection of the MAC message, or a sensitivity of the MAC message,
a MAC layer sequence number for replay protection, or
a length of secured MAC CE in the MAC message.

12. The apparatus of any of claims 1 to 11, wherein the apparatus comprises a terminal device, and the further apparatus comprises a network device, or
wherein the apparatus comprises a network device and the further apparatus comprises a terminal device.

13. A method comprising:
transmitting, to a further apparatus, a medium access control, MAC, message, the MAC message comprising at least one MAC protocol data unit, PDU,
wherein a MAC PDU of the at least one MAC PDU indicates a security type and a message authentication code,
wherein the security type indicates a coding metric for generating the message authentication code, and
wherein the message authentication code is generated according to the coding metric and based on at least one of:
a first key associated with the apparatus or the further apparatus,
a second key associated with a radio resource control, RRC, layer, or
information associated with the apparatus or the further apparatus.

14. A apparatus comprising:
means for transmitting, to a further apparatus, a medium access control, MAC, message, the MAC message comprising at least one MAC protocol data unit, PDU,
wherein a MAC PDU of the at least one MAC PDU indicates a security type and a message authentication code,
wherein the security type indicates a coding metric for generating the message authentication code, and
wherein the message authentication code is generated according to the coding metric and based on at least one of:
a first key associated with the apparatus or the further apparatus,
a second key associated with a radio resource control, RRC, layer, or
information associated with the apparatus or the further apparatus.

15. A computer readable medium comprising instructions stored thereon for causing an apparatus at least to perform the method of claim 13.
